# EUROPÄISCHE PATENTSCHRIFT

(11) **EP 1 720 922 B1**
(45) Veröffentlichungstag und Bekanntmachung des Hinweises auf die Patenterteilung: **10.10.2007**
(21) Anmeldenummer: 05701295.7
(22) Anmeldetag: 28.01.2005
(51) Int. Cl.: C08G 12/42, C08L 61/24, C08L 61/28

(54) **FLAMMFEST AUSGERÜSTETES AMINOPLASTHARZSYSTEM**
FLAME-RESISTANT AMINO RESIN SYSTEM
SYSTEME DE RESINE AMINOPLASTE ININFLAMMABLE

(30) Priorität: 30.01.2004 DE 102004006068
(43) Veröffentlichungstag der Anmeldung: 15.11.2006
(73) Patentinhaber: AMI Agrolinz Melamine International GmbH, 4021 Linz (AT)
(72) Erfinder: MACHHERNDL, Markus, A-4060 Leonding (AT); FÜRST, Christian, A-4040 Linz (AT); KALTENBACHER, Sascha, A-4030 Linz (AT); SCHMIDTBERGER, Siegfried, A-4020 Linz (AT)
(74) Vertreter: Gross, Felix
(86) Internationale Anmeldenummer: PCT/EP2005/000992
(87) Internationale Veröffentlichungsnummer: WO 2005/073266

(56) Entgegenhaltungen:
- WO-A-03/046053
- US-A- 5 629 382

## Beschreibung

Die Erfindung betrifft ein flammfest ausgerüstetes Aminoplastharzsystem gemäß Anspruch 1, ein Verfahren zu dessen Herstellung gemäß Anspruch 19 sowie dessen Verwendung gemäß Anspruche 23 und einen Verbundwerkstoff gemäß Anspruch 27.

Aminoplastharze sind mono- oder niedermolekulare Kondensationsprodukte einer Amino-, Imino- oder Amidgruppen enthaltenden Komponente, eines sogenannten Aminoplastbildners, mit einer Carbonylverbindung.

Unter den Aminoplastharzen haben Melamin-Formaldehyd- und Harnstoff-Formaldehydharze die größte technische Bedeutung.

Nicht- bzw. gering modifizierte Aminoplastharze besitzen den Vorteil, dass sie schwer entflammbar bzw. selbstverlöschend sind. Sie werden deshalb auch in Verbindung mit anderen Substanzen verwendet, um verschiedenste Materialien wie beispielsweise Kunststoffe oder Holz flammfest auszurüsten.

Aminoplastharze, welche beispielsweise mit Alkoholen oder Polyolen modifiziert sind, enthalten Ethergruppen als Struktureinheiten; man bezeichnet sie als modifizierte Aminoplastharze. Sie werden im allgemeinen als Vernetzer in polymeren Beschichtungssystemen, als Bestandteil von Klebstoffen oder auch bei der Herstellung von widerstandsfähigen Oberflächen verwendet. Aus US 4 985 307 sind wässrige Beschichtungssysteme bekannt, die modifizierte Aminoplastharzlösungen in Verbindung mit Phosphorsäurederivaten und verkapselten Flammhemmern enthalten und zur Flammfestmachung von Holz verwendet werden.

Herkömmliche nicht modifizierte oder gering modifizierte Aminoplastharze sind aufgrund ihres kleinen Verarbeitungsfensters und thermisch instabiler Molekülgruppen nicht für die üblichen thermoplastischen Verarbeitungsverfahren wie Extrusion, Spritzguss oder Blasformen geeignet.

Bekannt sind auch Aminoplastharze, die eine ausreichend hohe Schmelzviskosität besitzen, sodass sie nach thermoplastischen Verfahren verarbeitet werden können. Somit sind diese Aminoplastharze, wie sie beispielsweise in WO 03/046053 A1 beschrieben sind, für die Herstellung von Formteilen wie Platten, Rohren, Profilen, Fasern und dergleichen prinzipiell geeignet.

Solche Harze werden üblicherweise durch Aufkonzentrierung des bei der Harzsynthese erhaltenen modifizierten Flüssigharzes in eine Harzschmelze und anschließende Kondensation der Schmelze bei erhöhter Temperatur in Knetern, Extrudern oder dergleichen hergestellt.

Diese thermoplastisch verarbeitbaren modifizierten Aminoplastharze weisen mehrere Nachteile auf. Einer der Hauptnachteile ist ihre erhöhte Brennbarkeit im Vergleich zu unmodifizierten Aminoplastharzen. Der Einsatz herkömmlicher Flammhemmersysteme ist sehr problematisch. Da diese Systeme grossteils saure bzw. latent saure Bestandteile enthalten, wird bereits bei deren Zumischung zum Aminoplastharz die Aushärtung des Harzes katalysiert. Desweiteren besitzen diese Flammhemmersysteme eine geringe Kompatibilität mit dem Harz, was zu einer schlechten Verteilung und dadurch zu mangelhaftem Flammschutz führt.

Ein weiterer Nachteil der bekannten thermoplastisch verarbeitbaren Aminoplastharzsysteme liegt darin, dass nicht vollständig umgesetzte Modifikatoren wie vor allem Alkohole oder Polyole unerwünschte Spaltprodukte freisetzen, welche während oder nach der Aushärtung oder auch beim Lagern des Endproduktes aus dem Harz ausdiffundieren. Neben den gesundheitlichen Bedenken dieser Spaltprodukte verursachen sie ein Aufschäumen sowie einen großen Schwund beim Verpressen und beeinträchtigen dadurch die Qualität des fertigen Aminoplastharzproduktes, indem vielfach Risse und Unebenheiten auf der Oberfläche auftreten.

Ein weiterer Nachteil betrifft die Aushärtung der thermoplastisch verarbeitbaren Aminoplastharze. Ohne Härtungskatalysator verläuft die Aushärtung sehr langsam und nur bei sehr hohen Temperaturen. Der Nachteil herkömmlicher Härtungskatalysatoren ist, dass bei direkter Zudosierung des Härters zum Harz die katalytische Wirkung schon bei niedriger Temperatur einsetzt, das heißt, die Aushärtung findet vielfach bereits in einem viel zu frühen Verarbeitungsstadium statt. Darüber hinaus haben solche Härter oft eine geringe Kompatibilität mit dem Aminoplastharz, wodurch eine nur schlechte Verteilung im Harz erreicht werden kann.

Aus den genannten Gründen werden die bislang bekannten modifizierten thermoplastisch verarbeitbaren Aminoplastharzsysteme fast ausschliesslich in Lacksystemen eingesetzt, wo sie als Vernetzer dienen. Aufgrund der ausgezeichneten Werkstoff- und Verarbeitungseigenschaften dieser modifizierten Aminoplastharze wäre deren Einsatz als Werkstoff, beispielsweise als Matrixharz in Verbundwerkstoffen, jedoch wünschenswert.

Aufgabe der vorliegenden Erfindung war es demnach, ein Aminoplastharzsystem zu entwickeln, das flammfeste Eigenschaften besitzt und die genannten Nachteile nicht aufweist.

Diese Aufgabe wird durch ein Aminoplastharzsystem gemäß Anspruch 1 gelöst.

Gegenstand der vorliegenden Erfindung ist daher ein flammfest ausgerüstetes Aminoplastharzsystem, insbesondere Melamin-Formaldehydharz-, Melamin-/Harnstoff-Formaldehydharz- oder Harnstoff-Formaldehydharzsystem, mit
a) einer modifizierten Aminoplastharzmatrix, wobei im modifizierten Aminoplastharz die primären Aminoplastkondensationsprodukte mindestens teilweise in veretherter Form vorliegen und das modifizierte Aminoplastharz aus einer im wesentlichen lösungsmittelfreien Aminoplastharzschmelze erhalten wurde und
b) mindestens einer Phosphor und/oder Stickstoff und/oder Bor in chemisch gebundener Form enthaltenden und in verkapselter Form, insbesondere von einem Kapselwandmaterial umsschlossenen Form, in der Aminoplastharzmatrix vorliegenden Verbindung als flammhemmender Komponente.

Ein Vorteil des erfindungsgemäßen flammfest ausgerüsteten Aminoplastharzsystems liegt darin, dass es im Vergleich zu den bekannten thermoplastisch verarbeitbaren Aminoplastharzen eine stark erhöhte Flammfestigkeit aufweist.

Ein weiterer Vorteil liegt darin, dass die von nicht vollständig umgesetzten Harzmodifikatoren wie Alkoholen oder Polyolen bei der Aushärtung freigesetzten unerwünschten Spaltprodukte des erfindungsgemäßen Aminoplastharzsystems von den Kapseln und/oder von den verkapselten Verbindungen sowohl absorbiert als auch reaktiv gebunden werden können. Dies bewirkt, dass der Schwund beim Verpressen minimiert und eine nahezu rissfreie, glatte Aminoplastharzoberfläche erhalten wird.

Die modifizierte Aminoplastharzmatrix des erfindungsgemäßen Aminoplastharzsystems enthält mindestens ein modifiziertes Aminoplastharz.

Geeignete Aminoplastbildner für das modifizierte Aminoplastharz sind beispielsweise Melamin, Aminotriazine, Harnstoff, Dicyandiamid, Guanamine oder auch substituierte Melamine und Harnstoffe.

Bevorzugt werden Melamin oder Harnstoff oder Mischungen aus Melamin und Harnstoff verwendet. Insbesondere bevorzugt wird als Aminoplastbildner Melamin verwendet.

Geeignete Carbonylverbindungen für das in der Matrix enthaltene Aminoplastharz sind beispielsweise Formaldehyd, Acetaldehyd, Isobutyraldehyd, Aceton, Methylethylketon, Glyoxylsäure, Glyoxylsäuremethylesterhalbacetal oder Diethylketon.

Bevorzugt wird als Carbonylverbindung Formaldehyd verwendet.

Besonders bevorzugt ist ein Aminoplastharz, das gebildet wird durch Kondensation der Komponenten Formaldehyd, Melamin und / oder Harnstoff.

Die Aminoplastharze weisen ein molares Verhältnis von Aminoplastbildner zu Carbonylverbindung von 1 : 1,4 bis 1 : 6, bevorzugt von 1 : 1,5 bis 1 : 4, besonders bevorzugt von 1 : 1,5 bis 1 : 3 auf.

In den modifizierten Aminoplastharzen sind die primären Kondensationsprodukte teilweise oder vollständig bevorzugt mit C₁-C₄-Alkoholen verethert.

Das Molverhältnis Carbonylverbindung zu C₁-C₄-Alkohol bei der Herstellung der veretherten modifizierten Aminoplastharze liegt im Bereich von 1 : 2 bis 1 : 10, bevorzugt von 1 : 3 bis 1 : 7, besonders bevorzugt von 1 : 3 bis 1 : 5.

Die Veretherung des in der Aminoplastharzmatrix enthaltenen Aminoplastharzes kann nach der primären Kondensation des Aminoplastbildners mit der Carbonylverbindung in einem separaten zweiten Reaktionsschritt erfolgen.

Vorteilhafterweise erfolgt die Veretherung im selben Reaktionsschritt wie die primäre Aminoplastkondensation.

Das teilweise oder vollständig veretherte Aminoplastharz kann in einem weiteren Reaktionsschritt teilweise oder vollständig umgeethert werden, wobei die Umetherung bevorzugt mit aliphatischen C₄-C₁₈-Alkoholen oder aromatischen Alkoholen, Diolen oder Polyolen erfolgt. Es können auch Mischungen eingesetzt werden.

Beispiele für Polyole sind Poly-, Oligo-Ethylenglycol-Derivate, beispielsweise Simulsole; Oligo-, Hydroxycarbonsäurederivate, beispielsweise Caprolacton-derivate; Poly-, Oligo-Esterpolyole; Poly-, Oligo-Lactide; Zucker, Zuckerderivate; Stärke, Stärkederivate oder Cellulosederivate.

Das Molverhältnis Carbonylverbindung zu Umetherungsmittel bei der Herstellung der umgeetherten modifizierten Aminoplastharze liegt im Bereich von 2 : 1 bis 100 : 1, bevorzugt von 10 : 1 bis 70 : 1, besonders bevorzugt von 20 : 1 bis 60 : 1.

Ein modifiziertes Aminoplastharz im Sinne der vorliegenden Erfindung ist auch eines, das zusätzlich zu oder anstatt der Umetherung mit Alkoholen, Diolen und Polyolen beispielsweise durch Einkondensieren oder nachträglichen Zusatz von anderen gängigen Modifizierungsmitteln wie etwa Caprolactam, Sulfiten, Sulfonsäureamiden, Carbamaten, Salzen der Malein- bzw. Fumarsäuremonoamide, Epoxiden, Bisepoxiden oder Isocyanaten erhalten wird. Weiters können im modifizierten Aminoplastharz auch Füllstoffe und/oder Verstärkungsfasern, weitere Polymere sowie Stabilisatoren, UV-Absorber und/oder Hilfsstoffe enthalten sein.

Solche möglichen Zusatzstoffe sind beispielsweise in WO 03/046053 A1 beschrieben.

Das die erfindungsgemäße Aminoplastharzmatrix kennzeichnende modifizierte Aminoplastharz wird aus der korrespondierenden, im wesentlichen lösungmittelfreien Aminoplastharzschmelze erhalten.

Für die Aminoplastharzmatrix des erfindungsgemäßen Aminoplastharzsystems werden beispielsweise die in WO 03/046053 A1 beschriebenen Aminoplastharze verwendet.

Das erfindungsgemäße Aminoplastharzsystem enthält mindestens eine in verkapselter Form vorliegende Verbindung.

Die in verkapselter Form vorliegende Verbindung enthält Phosphor und/oder Stickstoff und/oder Bor in chemisch gebundener Form. Die Verbindung ist beispielsweise eine anorganische oder organische Phosphor-, Stickstoff- und/oder Borverbindung.

Beispiele für solche Phosphor-, Stickstoff- und BorVerbindungen sind Ammonium-, Amin-, Melamin-, Aminotriazin-Salze der Phosphorsäure, Diphosphorsäure, Oligophosphorsäuren, Metaphosphorsäuren, Polyphosphorsäuren, Phosphinsäure, Phosphonsäure, und Diphosphonsäure; nichtionische Reaktionsprodukte von Aminotriazinen beispielsweise Melamin mit Phosphorpentoxid und Phosphortrioxid; Phosphazene; Phosphornitride PₓN_{y}; Phosphoroxynitride POₓN_{y}; Borphosphat BPO₄; Bornitrid BN; Bortrioxid B₂O₃; Natriumtetraborat Na₂B₄O₇; Borsäure B(OH)₃; Di-, Oligo-, Poly-, Phosphorsäureester, sowie deren Ammonium-Amin-, Melamin-, Aminotriazin-Salze, auf Basis der Umsetzung von Phosphorpentoxid mit Diolen oder Polyolen, beispielsweise Pentaerythrit oder Dipentaerythrit; Di-, Oligo-, Poly-, Phosphonsäureester, sowie deren Ammonium-, Amin-, Melamin-, Aminotriazin-Salze, auf Basis der Umsetzung von Phosphortrioxid mit Diolen oder Polyolen, beispielsweise Pentaerythrit oder Dipentaerythrit; verkapselte Aminotriazine, beispielsweise Melamin sowie Mischungen, Reaktionsprodukte, Addukte und Derivate der genannten Verbindungen.

Besonders bevorzugte verkapselte Verbindungen sind Ammoniumpolyphosphat, Melaminpolyphosphat, Phosphorsäureester und Phosphonsäureester auf Basis der Umsetzung von Phosphorpentoxid bzw. Phosphortrioxid mit Pentaerythrit bzw. Dipentaerythrit, sowie deren Ammonium- und Melaminsalze.

In einer bevorzugten Ausführungsform wird als in verkapselter Form vorliegende Verbindung eine Verbindung verwendet, die neben der flammhemmenden auch eine protonenfreisetzende, also saure Wirkung hat.

Dies hat den Vorteil, dass solche Verbindungen im erfindungsgemäßen Aminoplastharzsystem neben ihrer Wirkung als Flammhemmer auch als Härtungskatalysator dienen. Die saure Wirkung ist jedoch durch die Verkapselung soweit abgeschirmt, dass im Gegensatz zu nicht verkapselten protonenfreisetzenden Verbindungen in der Aminoplastharzmatrix keine verfrühte, unerwünschte Aushärtung stattfindet. Zum gewünschten Aushärtungszeitpunkt wird durch moderate pH-Wert-Senkung eine Härtungskatalyse insofern erreicht, als die Aushärtungstemperaturen der erfindungsgemäßen Aminoplastharzsysteme niedriger als bei Systemen ohne jegliche Härtungskatalysatoren sind. Darüber hinaus wird durch die katalytische Wirkung von verkapselten, protonenfreisetzenden Verbindungen ein vollständigerer Umsatz der Harzmodifikatoren mit dem Aminoplastharz, das heißt im allgemeinen eine vollständigere Veretherung, erreicht.

Es ist möglich, im erfindungsgemäßen Aminoplastharzsystem eine oder mehrere verschiedene in verkapselter Form vorliegende Verbindungen einzusetzen. Beispielsweise können Mischungen einer rein flammhemmenden Komponente wie etwa verkapseltes Bortrioxid mit einer sowohl sauer als auch flammhemmend wirkenden Komponente wie etwa verkapseltes Ammoniumpolyphosphat verwendet werden.
Durch verschiedene Kombinationen können Synergismen ausgenützt werden, das heißt, die Komponenten werden durch deren kombinierten Einsatz in ihrer Wirkung verstärkt.

Das Kapselwandmaterial, welches die Verbindung umgibt, kann beispielsweise folgende Materialien erhalten: Alginate, Gelatine, Agar-Agar, Gummi Arabicum, Latex, Chitosan, Aminoplastharze, Phenolharze, Epoxidharze, ungesättigte Polyesterharze, Polyvinylalkohole, Polyacrylate, Polymethacrylate, Polyacroleine, Polyamide, Polyethylenglykole, Polyethersulfone, Wachse, Paraffine, Cellulosederivate, Glycerinmonostearate, Ethyl- und Styrol-Maleinsäureanhydrid-Copolymere sowie verschiedene andere synthetische Polymere.

Vorteilhaft ist es, wenn das Kapselwandmaterial ein Duroplastharz, insbesondere ein Aminoplastharz, ein Epoxidharz, ein ungesättigtes Polyesterharz oder ein Phenolharz enthält.

Die Herstellung von Duroplastharz-verkapseltem Ammoniumpolyphosphat ist beispielsweise in DE 2949537 oder in DE 3316880 beschrieben.

Besonders bevorzugt enthält das Kapselwandmaterial ein modifiziertes Aminoplastharz. Insbesondere bevorzugt sind solche modifizierten Aminoplastharze, die vergleichbare Oberflächeneigenschaften, wie beispielsweise Hydrophilie, Hydrophobie, wie das die Aminoplastharzmatrix bildende modifizierte Aminoplastharz haben.

In diesem Fall wird durch die sehr gute Kompatibilität des Kapselwandmaterials mit dem Matrix-Aminoplastharz eine besonders vorteilhafte homogene Verteilung der Kapseln in der Aminoplastharzmatrix erreicht. Daraus resultiert unter anderem eine ausgezeichnete Flammfestigkeit des erhaltenen erfindungsgemäßen Aminoplastharzsystems.

Da die in verkapselter Form vorliegende Verbindung möglichst homogen in der Aminoplastharzmatrix verteilt sein soll, ist es von Vorteil, wenn bei der Zugabe der Kapseln zum modifizierten Aminoplastharz eine gute Durchmischung erfolgt.

Besonders vorteilhaft ist es, wenn das Verhältnis des durchschnittlichen Durchmessers D zur durchschnittlichen Kapselwanddicke d der im erfindungsgemäßen Aminoplastharzsystem vorliegenden Kapseln zwischen 5 und 1000 liegt. Durch das Verhältnis D/d ist die Zeit bis zur Freisetzung der verkapselten Verbindung definiert. Für D/d >> D ergibt sich eine Kapsel mit sehr geringer Kapselwanddicke, wo der Wirkstoff nach kurzer thermischer Belastung freisetzt wird. Für D/d < D ergibt sich eine Kapsel mit dicker Kapselwanddicke, wo der Wirkstoff erst nach längerer thermischer Belastung freisetzt wird.

Der durchschnittliche Durchmesser D der Kapseln liegt vorteilhafterweise im Bereich von 1-100 µm, bevorzugt im Bereich von 10-60 µm, besonders bevorzugt im Bereich von 20-50 µm.

Die geometrische Form der Kapseln kann beispielsweise kugelförmig, oval oder stäbchenförmig sein, bevorzugt werden sphärische Kapseln eingesetzt.

Mit sphärischen Kapseln lässt sich eine besonders homogene Verteilung im Aminoplastharz erzielen.

Besonders vorteilhaft ist ein Aminoplastharzsystem, welches 0,5 bis 50 Gew.%, bevorzugt 1 bis 40 Gew.%, besonders bevorzugt 5 bis 25 Gew.% an in verkapselter Form vorliegenden Verbindungen bezogen auf das Gesamtgewicht des ausgehärteten Aminoplastharzsystems enthält.

Die Menge der in den Kapseln enthaltenen Verbindung beträgt etwa 50 bis 98 Gew.%, bevorzugt 70 bis 90 Gew.%, bezogen auf das Gesamtgewicht einer in verkapselter Form vorliegenden Verbindung.

Die in verkapselter Form vorliegenden Verbindungen liegen üblicherweise in Pulverform vor. Sie haben ein Schüttgewicht von 200 bis 1600 g/Liter, bevorzugt von 500 bis 1100 g/Liter. Sie können dem modifizierten Aminoplastharz als Pulver und/oder als Suspension zugegeben werden.

Als Suspensionsmittel können beispielsweise Wasser, Alkohole wie etwa Butanol oder Methanol, Diole oder Polyole wie beispielsweise Simulsole, Caprolacton-Derivate, Poly-, Oligo-Esterpolyole oder Trimethylolpropan verwendet werden. Als weitere Suspensionsmittel sind höherviskose, aufkonzentrierte Harzlösungen möglich.

Besonders bevorzugt ist es, die in verkapselter Form vorliegende Verbindung in suspendierter Form zuzugeben. Dabei ist es besonders vorteilhaft, als Suspensionsmittel die im wesentlichen lösungsmittelfreie Aminoplastharzschmelze und/oder zumindest einen Teil der für die Modifizierung des Aminoplastharzes verwendeten Umetherungs- und/oder Modifizierungsmittel zu verwenden.

Der Feststoffgehalt der Suspension beträgt etwa 30 bis 90 Gew.%, bevorzugt etwa 40 bis 80 Gew.%.

Die Viskosität der Suspensionen liegt im Bereich von etwa 10 bis 5000 mPa*s, bevorzugt von etwa 250 bis 1000 mPa*s.

Um eine pump- und dosierfähige Suspension zu erhalten, kann die Suspension gerührt und erwärmt werden.

Die Herstellung des erfindungsgemäßen Aminoplastharzsystems erfolgt in den Verfahrensstufen
a) Herstellung einer modifizierten Aminoplastharzlösung bzw. -suspension in einem Lösungsmittel,
b) Aufkonzentrierung der modifizierten Aminoplastharzlösung bzw. -suspension zur modifizierten, im wesentlichen lösungsmittelfreien Aminoplastharzschmelze,
c) reaktive Umsetzung der modifizierten, im wesentlichen lösungsmittelfreien Aminoplastharzschmelze bei erhöhter Temperatur beispielsweise in einem Extruder oder Kneter zur Vorkondensation und Konditionierung und
d) Konfektionierung und Austragung des flammfest ausgerüsteten Aminoplastharzsystems.

Die in verkapselter Form vorliegende Verbindung kann während oder nach jeder der Verfahrensstufen dem modifizierten Aminoplastharz zugegeben werden.

Beispielsweise wird die in verkapselter Form vorliegende Verbindung in Pulverform bei oder nach der Synthese des flüssigen modifizierten Aminoplastharzes zugegeben, sodass eine modifizierte Aminoplastharzsuspension erhalten wird.

Eine weitere Möglichkeit besteht darin, die Verbindung bei jenem Verfahrensschritt zuzugeben, wo das modifizierte Aminoplastharz bereits als modifizierte, im wesentlichen lösungsmittelfreie Aminoplastharzschmelze vorliegt, das heisst vor oder während der reaktiven Umsetzung.

Wird die Verbindung in Form einer Suspension zugegeben, erfolgt die Zugabe vor oder während der reaktiven Umsetzung.

Bevorzugt erfolgt die Zugabe während der reaktiven Umsetzung in einem Extruder, wobei die Kapseln vorteilhafterweise nach der Hochtemperatur-Vorkondensation, -Konditionierung und reaktiven Umsetzung mit Umetherungsmitteln/Modifikatoren des modifizierten Aminoplastharzes zugegeben werden.

Beispielsweise kann beim Betrieb mit zwei Extrudern in Serie im ersten Extruder die Hochtemperatur-Vorkondensation und - Konditionierung und reaktive Umsetzung mit Umetherungs- und/oder Modifizierungsmitteln erfolgen.
Im zweiten Extruder wird dann bei gemäßigten Bedingungen die in verkapselter Form vorliegende Verbindung mit der modifizierten, im wesentlichen lösungsmittelfreien Aminoplastharzschmelze compoundiert, wobei anschließend eine weitere Vorkondensation und Konditionierung sowie reaktive Umsetzung mit Umetherungsmitteln und/oder Modifizierungsmitteln unter leicht sauren, katalytischen Bedingungen stattfindet.

Es ist auch möglich, die Zugabe der in verkapselter Form vorliegenden Verbindung auf mehr als eine Verfahrensstufe aufzuteilen.

Auch die Umetherungs- und/oder Modifizierungsmittel können in verschiedenen Verfahrensschritten, beispielsweise während und/oder nach der Synthese des modifizierten Aminoplastharzes und/oder während dem Aufkonzentrieren und/oder der reaktiven Umsetzung zugegeben werden.
Die Modifizierungsmittel werden im allgemeinen in einer Menge von 0,5 - 20 Gew.% zugesetzt.

Die Herstellung der modifizierten Aminoplastharzlösung bzw. -suspension erfolgt in einem pH-Bereich von pH = 2 bis pH = 7, bevorzugt von etwa pH = 3 bis pH = 6,9.
Dabei ist der Temperaturbereich etwa 40 bis 160 °C, bevorzugt etwa 70 bis 120 °C und der Druckbereich etwa 0 bis 15 bar, bevorzugt etwa 0 bis 5 bar Überdruck. Die Reaktionszeit beträgt zwischen etwa 5 und 300 Minuten, bevorzugt zwischen etwa 15 und 120 Minuten. Der Feststoffgehalt der modifizierten Aminoplastharzlösung- und oder -suspension liegt im Bereich von etwa 15 bis 60 Gew.%, bevorzugt im Bereich von etwa 25 bis 40 Gew.%.

Anschließend wird der pH-Wert der modifizierten Aminoplastharzlösung bzw. -suspension alkalisch gestellt, wobei ein pH-Wert im Bereich von etwa pH = 7 bis 12, bevorzugt im pH-Bereich von etwa 8 - 9,5 vorteilhaft ist.

Durch Abdestillation der Lösungsmittel wird die modifizierte Aminoplastharzlösung bzw. -suspension aufkonzentriert. Dies erfolgt beispielsweise in Rührreaktoren mit Destillationsaufsatz, in Dünnschichtverdampfern oder in Filmtrudern, bevorzugt in Dünnschichtverdampfern.
Die Aufkonzentrierung erfolgt in einem Temperaturbereich von etwa 50 bis 180 °C, bevorzugt von etwa 70 bis 140 °C und in einem Druckbereich von etwa -1 bis 0 bar, bevorzugt von etwa -0,95 bis -0,5 bar Überdruck. Die Verweilzeit beträgt zwischen etwa 1 und 120 Minuten, bevorzugt zwischen etwa 3 und 60 Minuten.
Dabei wird eine modifizierte, im wesentlichen lösungsmittelfreie Aminoplastharzschmelze mit einem Feststoffgehalt von etwa 95 bis 100 Gew.% und einer Glastemperatur von etwa 30-130°C, bevorzugt etwa 60-100°C, erhalten.
Die Viskosität der Schmelze liegt im Bereich von etwa 150 mPa.s bis 100 Pa.s, bevorzugt bei etwa 300 mPa.s bis 30 Pa.s, gemessen bei 130 °C.

Anschließend wird die modifizierte, im wesentlichen lösungsmittelfreie Aminoplastharzschmelze durch reaktive Umsetzung bei erhöhter Temperatur beispielsweise in einem Extruder oder Kneter zur Vorkondensation und Konditionierung weiterverarbeitet.

Falls Umetherungsmittel und/oder Modifikatoren zugesetzt wurden, dienen diese Apparate ebenfalls zur Compoundierung und Herstellung einer gleichmässigen Verteilung dieser Stoffe im Aminoplastharz, und es erfolgt dort deren reaktive Umsetzung mit der Aminoplastharzschmelze.

Bei der Vorkondensation erfolgt ein Molmassenaufbau der monomeren zu oligomeren beziehungsweise polymeren Strukturen. Bei der Konditionierung erfolgt eine Abspaltung von thermisch instabilen, leicht flüchtigen, gasförmigen Verbindungen und Molekülgruppen aus der modifizierten Aminoplastharzschmelze, welche dadurch an Lagerstabilität gewinnt.

Die reaktive Umsetzung wird bevorzugt in einem Doppelschneckenextruder durchgeführt. Zur Verweilzeiterhöhung kann ein Verweilzeitapparat vorgeschalten werden.

Eine vorteilhafte apparative Variante besteht darin, zwei Extruder in Serie zu betreiben.
Dadurch wird hohe Flexibilität betreffend des Ortes der Zudosierung von Komponenten, der reaktiven Umsetzung, der Vorkondensation und der Konditionierung erreicht.

Die reaktive Umsetzung erfolgt in einem Bereich der Massetemperatur von etwa 130 bis 250 °C, bevorzugt von etwa 140 bis 220 °C und in einem Druckbereich von etwa -1 bis 0 bar, bevorzugt von etwa -0,95 bis -0,1 bar Überdruck. Die Verweilzeit beträgt zwischen etwa 0,5 und 10 Minuten, bevorzugt zwischen etwa 1 und 5 Minuten.

Nach der reaktiven Umsetzung des die verkapselte Verbindung enthaltenden Aminoplastharzes wird dieses konfektioniert, beispielsweise granuliert und das erfindungsgemäße flammfest ausgerüstete Aminoplastharzsystem ausgetragen.

Dabei erfolgt nach dem Austritt aus dem Extruder ein Abkühlen und Konfektionieren der Aminoplastharzschmelze.

Hierzu können Apparate wie Stranggranulatoren, Walzengranulatoren, Heissabschlaggranulatoren oder Pastilliervorrichtungen verwendet werden.

Das erfindungsgemäße flammfest ausgerüstete Aminoplastharzsystem liegt als Feststoffgranulat vor mit einer Körnung von etwa 0,2-10 mm, bevorzugt 1-3 mm. Das Aussehen richtet sich nach der Farbe der verkapselten Verbindung bzw. der Additive und ist üblicherweise weiß-opak. Der Glaspunkt des flammfest ausgerüsteten Aminoplastharzsystems liegt bei etwa 40 bis 140°C, der Schmelzpunkt bei etwa 70°C bis 160°C. Die Viskosität des erfindungsgemäßen Aminoplastharzsystems liegt im Bereich von etwa 5 bis 100.000 Pa*s, bevorzugt im Bereich von etwa 50 bis 50000 Pa*s, gemessen bei 130 °C.

Das erfindungsgemäße Aminoplastharzsystem kann beispielsweise für die Herstellung von Hybridharzsystemen verwendet werden.

Diese können beispielsweise durch Mischung und/oder chemische Umsetzung der erfindungsgemäßen Aminoplastharzsysteme mit modifizierten und/oder unmodifizierten Melamin-Formaldehydharzen, Epoxidharzen, Polyurethanharzen, ungesättigten Polyesterharzen und/oder Alkydharzen als Schmelzen in einem Kneter, Mischer oder Extruder hergestellt werden.
Der Vorteil solcher Systeme ist, dass durch die Compoundierung der genannten Harzsysteme mit den erfindungsgemäßen Aminoplastharzsystemen eine Flammfestausrüstung dieser Harzsysteme erreicht wird.

Es ist auch möglich, das erfindungsgemäße flammfest ausgerüstete Aminoplastharzsystem als Pressmassenharz oder Spritzgussharz weiter zu verarbeiten.

Für Pressmassen wird üblicherweise das erfindungsgemäße Aminoplastharzsystem als Granulat bzw. Pulver verwendet.

Die Viskosität des dafür geeigneten Aminoplastharzes liegt üblicherweise im Bereich von etwa 100 bis 100.000 Pa*s, bevorzugt im Bereich von etwa 1000 bis 50000 Pa*s, gemessen bei 130 °C.

Als Presswerkzeuge werden beispielsweise Oberkolben- und/oder Unterkolbenpressen eingesetzt.

Die Presstemperatur liegt üblicherweise im Bereich von etwa 130° bis 220°C, bevorzugt von etwa 150°C bis 190°C. Der Pressdruck kann im Bereich von etwa 5 bar bis 250 bar gewählt werden, bevorzugt liegt er zwischen etwa 50 bis 200 bar. Dabei liegt die Pressdauer für einen Aushärtungsgrad von 90-95% zwischen etwa 120 sec und 600 sec, bevorzugt zwischen etwa 180 sec und 360 sec.

Für den Spritzguss wird das erfindungsgemäße flammfest ausgerüstete Aminoplastharzsystem beispielsweise in einem Schneckenförderer, bevorzugt in einem Extruder als Granulat und/oder als Pulver aufgegeben, darin aufgeschmolzen und in die Spritzgußform injiziert.

Die Viskosität des dafür geeigneten Aminoplastharzes liegt üblicherweise im Bereich von etwa 5.000 bis 100.000 Pa*s, bevorzugt im Bereich von etwa 10.000 bis 50000 Pa*s, gemessen bei 130 °C.
Herkömmliche Spritzgießanlagen können hierfür eingesetzt werden. Solche Systeme arbeiten beispielsweise in einem Bereich von etwa 130° bis 220°C, bevorzugt von etwa 150°C bis 190°C. Der Einspritzdruck an der Düse liegt im Bereich von etwa 500 bar bis 2500 bar, bevorzugt zwischen etwa 1000 bis 2000 bar. Dabei beträgt die Zykluszeit des Spritzgusses für einen Aushärtungsgrad von 90-95% liegt zwischen etwa 60 sec und 600 sec, bevorzugt zwischen etwa 120 sec und 300 sec.

Weiterhin ist es möglich, das erfindungsgemäße Aminoplastharzsystem mit einem Trägermaterial zu einem Verbundwerkstoff zu verarbeiten.

Dabei können als Trägermaterialien beispielsweise Fasern, Fliese, Gewebe, Holz und/oder auch Polymere verwendet werden. Als Fasern werden bevorzugt Cellulose-, Glas-, Flachs- und/oder Kohlenstofffasern eingesetzt.

Für die Herstellung der Verbundwerkstoffe ist es beispielweise möglich, das Trägermaterial mit dem erfindungsgemäßen Aminoplastharzsystem zu bepulvern. Um eine möglichst gute Verteilung des Harzsystems zu gewährleisten, kann es notwendig sein, das Harzgranulat vorher zu mahlen. Eine weitere Möglichkeit besteht darin, dass das Harz aufgeschmolzen wird und das Trägermaterial durch die Harzschmelze gezogen wird, wodurch der Harzauftrag erfolgt.

Nachdem das Harz auf das Trägermaterial aufgebracht ist, erfolgt ein Vorkondensationsschritt im Bereich von etwa 110-250 °C, bevorzugt im Bereich von etwa 150-220°C für eine Dauer von etwa 1-10 Minuten, wobei das Harzsystem in geschmolzenem Zustand weiterkondensiert und so auf dem Trägermaterial fixiert wird. Dabei werden lagerfähige Prepregs erhalten.

Der Gehalt an erfihdungsgemäßem flammfest ausgerüstetem Aminoplastharzsystem im Verbundwerkstoff liegt im Bereich von etwa 20 bis 80 Gew.%, wobei der tatsächliche Gehalt abhängig vom gewünschten Verarbeitungsverfahren und den erforderlichen Eigenschaften ist.

Die erhaltenen Prepregs können dann anschließend unter Temperaturerhöhung jeder gewünschten Formgebung unterzogen werden.

Die Formgebung erfolgt beispielsweise durch einen Pressvorgang wie Formpressen, Doppelbandpressen, 3D-Pressen und/oder Tiefziehen.

Beim Pressvorgang erfolgt die Aushärtung des Harzsystems. Der Aushärtungsgrad kann mittels Ultraschall verfolgt und auf den gewünschten Wert eingestellt werden.

Falls eine latent saure Verbindung verkapselt ist, wird während des Verpressens dosiert Säure freigesetzt und die Aushärtung erfolgt im sauren pH-Bereich. Besitzt die verkapselte Verbindung keine latent sauren Eigenschaften, erfolgt die Aushärtung alkalisch. Die Aushärtung kann grundsätzlich in allen pH-Bereichen erfolgen, wobei im alkalischen pH-Bereich die Aushärtungszeit wesentlich höher als im sauren pH-Bereich liegt. So liegen im alkalischen pH-Bereich die Aushärtungszeiten zwischen etwa 120 und 600 sec, im sauren pH-Bereich liegen die Aushärtungszeiten zwischen etwa 60 und 360 sec.

Bevorzugt werden die Verbundwerkstoffe in einem sauren pH-Bereich von etwa pH 3 - 6,5 ausgehärtet. Dabei betragen die Temperaturen bei der Aushärtung etwa 90 bis 250 °C, bevorzugt etwa 120 bis 190 °C. Die Dauer des Aushärtungsvorganges beträgt etwa 0,5 bis 30 Minuten, bevorzugt etwa 3 bis 10 Minuten. Der Pressdruck liegt im Bereich von 10 bis 250 bar, bevorzugt von etwa 50 bis 200 bar.

Falls durch das Verpressen und Aushärten Spannungen im Material entstehen, können diese durch Tempern abgebaut werden. Hierfür werden die Proben bis zu etwa 240 Stunden bei bis zu etwa 110 °C bis zur Gewichtskonstanz gelagert.

Das erfindungsgemäße Aminoplastharzsystem kann als flammfester Aminoplastharzwerkstoff beispielsweise für die Herstellung von Rohren, Platten, Profilen, Spritzgussteilen oder Fasern eingesetzt werden.

Eine weitere Anwendungsmöglichkeit ist beispielsweise als Härter bzw. Vernetzer in Pulverlacksystemen.

Verbundwerkstoffe, die mit dem erfindungsgemäßen Harzsystem hergestellt werden, können beispielsweise für die Herstellung von flammfesten Produkten wie Formteile für die Automobilindustrie, Verkleidungen für Gebäude und Maschinen, Kabelisolierungen oder Dämmstoffen eingesetzt werden.

Im folgenden wird die Erfindung anhand von Beispielen erläutert:

### 1 Allgemeines Herstellungsbeispiel für das modifizierte Aminoplastharzsystem

### 1.1 Herstellung der modifizierten Aminoplastharzlösung bzw. -suspension

Die Versuchsbeispiele für die Herstellung der modifizierten Aminoplastharzlösung bzw. -suspension sind aus **Tabelle 1** ersichtlich.

Bei den Versuchen 1 bis 10 wurde kein Umetherungsmittel zum veretherten Melaminharz zugegeben.

Bei den Beispielen 5, 10, 11 und 15 wurde keine verkapselte Verbindung zugegeben, sie dienen als Vergleichsbeispiele.

Die in der Tabelle angeführten Mengen an Melamin, Methanol und p-Toluolsulfonsäure als Katalysator wurden in einem Rührreaktor unter Rühren vermischt.

Danach wurde bei den Versuchen 11, 12, 15 und 16 das Umetherungsmittel Simulsol BPPE zur Reaktionsmischung zugegeben - diese Variante ist in Tabelle 1 aus der **Spalte a1** ersichtlich.

Bei den Versuchen 1 und 6 wurde nach dem Vermischen von Melamin, Methanol und p-Toluolsulfonsäure die verkapselte Verbindung in Form von Exolit AP 462 zugegeben. Diese Variante ist in Tabelle 1 aus der **Spalte b1** ersichtlich.

Die Mischung wurde dann auf die Reaktionstemperatur **T_{Reakt}** erhitzt. Anschließend wurde auf ca. 60 °C vorerwärmtes Formalin schnell zugemischt und somit die Reaktion gestartet. Nach Erreichen des Klarpunktes (t_{Klar}) wurde noch solange wie gewünscht bei der Reaktionstemperatur weitergerührt (Reaktionszeit **t_{Reakt}).** Danach wurde die Reaktion durch Abkühlen der Reaktionsmischung auf ca. 30 °C abgebrochen.
Bei den Versuchen 1 und 6 ist kein Klarpunkt ersichtlich, da die Kapseln in der Reaktionsmischung suspendiert sind. Es wird daher in der Spalte **t_{Reakt}** die Gesamtreaktionszeit angegeben.

Nach dem Abkühlen wurde mit KOH-Lösung der pH-Wert auf ca. 9.5 gestellt.
Ergebnis der Synthese war eine modifizierte Aminoplastharzlösung bzw. -suspension in Methanol/Wasser.

Bei den Versuchen 2, 7, 12, und 16 wurde die verkapselte Verbindung in Form von Exolit AP 462 an dieser Stelle der fertigen Aminoplastharzlösung zugegeben. Diese Variante ist in Tabelle 1 aus der **Spalte b2** ersichtlich.

### 1.2. Aufkonzentrierung der modifizierten Aminoplastharzlösung bzw. -suspension aus 1.1

Die Versuchsparameter der Beispiele 1 bis 18 für das Aufkonzentrieren des Aminoplastharzes sind in **Tabelle 2** dargestellt.

Nach der Aminoplastharzsynthese wurde mit zwei in Serie geschaltenen Dünnschichtverdampfern DSV1 und DSV2 unter Vakuum **(P_{DSV1}, P_{DSV2})** und Erhitzen **(T_{DSV1}, T_{DSV2})** das Methanol/wasser-Lösungsmittelgemisch vom Aminoplastharz abgetrennt und eine Aminoplastharzschmelze erhalten.
Der Input an Aminoplastharzlösung in den ersten Dünnschichtverdampfer DSV1 ist in Tabelle 2 mit **m'₁** bezeichnet, der Output an Aminoplastharzschmelze aus dem zweiten Dünnschichtverdampfer DSV2 mit **m'₂.** Dieser Output aus dem DSV2 entspricht dem Input in den nachfolgenden Extruder. Die Drehzahl des DSV1 ist mit **n_{DSV1}**, die Drehzahl des DSV2 mit **n_{DSV2}** angegeben.
Entsprechend der in Tabelle 2 mit **Spalte a3** bezeichneten Variante wurde bei den Versuchen 13 und 17 das Umetherungsmittel Simulsol BPPE in den Dünnschichtverdampfer DSV2 zudosiert.
Nach der Aufkonzentrierung wurde eine modifizierte im wesentlichen lösungsmittelfreie Aminoplastharzschmelze erhalten.

### 1.3. Reaktive Umsetzung der modifizierten Aminoplastharzschmelze

Die modifizierte, im wesentlichen lösungsmittelfreie Aminoplastharzschmelze aus 1.2. wurde im nachfolgenden Extrusionschritt reaktiv umgesetzt. Die Versuchsparameter sind in der **Tabelle 3** dargestellt.

Bei den Beispielen 14 und 18 wurde im Extrusionschritt das Umetherungsmittel Simulsol BPPE zugegeben. Diese Variante ist in der Tabelle 3 mit **Spalte a4** bezeichnet.

Bei den Versuchen 4, 9, 13, 14, 17 und 18 wurden die Exolit AP 462 - Kapseln im Extrusionsschritt zugegeben. Diese Variante ist in der Tabelle 3 mit **Spalte b3** bezeichnet.

Bei den Versuchen 3 und 8 wurde ebenfalls die verkapselte Verbindung Exolit AP 462 im Extrusionsschritt zugegeben, wobei sie in 50 Gew.% Harzlösung suspendiert wurde. In der Tabelle ist diese Variante aus der **Spalte ab1** ersichtlich. Die 50 Gew.% Harzlösung wurde, gemäß der Beispielnumerierung, aus der entsprechenden Harzlösung aus 1.1 hergestellt. Die Spalte ab1 ist untergliedert in den Gesamtmassenstrom [kg/h] (Suspensionsmittel + Kapseln) und den Gehalt an Kapseln [Gew.%] in der Suspension.

Die Extrusion erfolgte unter Entgasungsvakuum **P_{Extr}**, einer Durchschnittstemperatur der ersten 6 Extruderzylinder von **Tø₁₋₆**, einer Massetemperatur von **T_{Masse}** und einer Schneckendrehzahl **n_{Extr}.** Der Ausstoss des Extruders ist mit **m'_{Extr}** angegeben.

Der extrudierte Strang des erfindungsgemäßen Aminoplastharzsystems wurde nach der Extrusion gekühlt und granuliert. Das erhaltene Produkt war ein Granulat mit einem Glaspunkt Tg sowie einer Schmelzviskosität **η**.

Die Schmelzviskosität η wurde isotherm bei 100 und 130 °C gemessen. Falls eine Messung bei einer Temperatur nicht möglich war ist das durch "--" gekennzeichnet.

In Tabelle 3 ist auch der **Kapselgehalt** in Gew.% bezogen auf das Gesamtgewicht des Extrudates angeführt.

Die in der Tabelle angegebene **Aushärtungszeit in** s bezeichnet die Zeitdauer, welche für einen Aushärtungsgrad von 90 bis 95 % bei der jeweiligen Temperatur benötigt wird. Die Angabe erfolgt in "Aushärtungszeit [s] / Aushärtungstemperatur [°C]".
Aus der Tabelle 3 ist erkennbar, dass bei denjenigen Aminoplastharzsystemen, denen keine verkapselten Verbindungen zugegeben wurden (Vergleichsversuche 5, 10, 11, 15) sowohl die Aushärtungszeit deutlich länger ist als auch die notwendige Aushärtungstemperatur deutlich höher ist im Vergleich zu den erfindungsgemäßen Aminoplastharzsystemen, welche verkapselte Verbindungen enthalten.

**Tabelle 1**

| | Herstellung der modifizierten Aminoplastharzlösungen | | | | | | | | | | | | |
|---|---|---|---|---|---|---|---|---|---|---|---|---|---|
| Bsp. Nr. | Melamin [kg] | Formalin 37% [kg] | CH₃OH [kg] | Molverhältnis CH₃OH | p-TsOH [kg] | Umetherungsmittel¹ [kg] | | Kapseln² [kg] | | T_{Reakt} [°C] | t_{Klar} [min] | t_{Reakt} [min] | Feststoffgehalt [Gew.%] |
| | | | | | | a1 | a2 | b1 | b2 | | | | |
| 1 | 19,0 | 24,46 | 57,88 | 1/2/12 | 0,12 | - | - | 3,39 | - | 95 | - | 30* | 33,1 |
| 2 | 19,0 | 24,46 | 57,88 | 1/2/12 | 0,12 | - | - | - | 3,39 | 95 | 28 | 2 | 33,1 |
| 3 | 19,0 | 24,46 | 57,88 | 1/2/12 | 0,12 | - | - | - | - | 95 | 28 | 2 | 30,5 |
| 4 | 19,0 | 24,46 | 57,88 | 1/2/12 | 0,12 | - | - | - | - | 95 | 28 | 2 | 30,5 |
| 5 | 19,0 | 24,46 | 57,88 | 1/2/12 | 0,12 | - | - | - | - | 95 | 28 | 2 | 30,5 |
| 6 | 15,55 | 30,0 | 55,23 | 1/3/14 | 0,07 | - | - | 4,98 | - | 85 | - | 60* | 31,6 |
| 7 | 15,55 | 30,0 | 55,23 | 1/3/14 | 0,07 | - | - | - | 4,98 | 85 | 30 | 30 | 31,6 |
| 8 | 15,55 | 30,0 | 55,23 | 1/3/14 | 0,07 | - | - | - | - | 85 | 30 | 30 | 28,2 |
| 9 | 15,55 | 30,0 | 55,23 | 1/3/14 | 0,07 | - | - | - | - | 85 | 30 | 30 | 28,2 |
| 10 | 15,55 | 30,0 | 55,23 | 1/3/14 | 0,07 | - | - | - | - | 85 | 30 | 30 | 28,2 |
| 11 | 15,55 | 30,0 | 55,23 | 1/3/14 | 0,07 | 4,81 | - | - | - | 85 | 30 | 30 | 31,5 |
| 12 | 15,55 | 30,0 | 55,23 | 1/3/14 | 0,07 | 4,81 | - | - | 13,8 | 85 | 30 | 30 | 39,4 |
| 13 | 15,55 | 30,0 | 55,23 | 1/3/14 | 0,07 | - | - | - | - | 85 | 30 | 30 | 28,2 |
| 14 | 15,55 | 30,0 | 55,23 | 1/3/14 | 0,07 | - | - | - | - | 85 | 30 | 30 | 28,2 |
| 15 | 15,55 | 30,0 | 55,23 | 1/3/14 | 0,07 | 1,49 | - | - | - | 85 | 30 | 30 | 29,3 |
| 16 | 15,55 | 30,0 | 55,23 | 1/3/14 | 0,07 | 1,49 | - | - | 9,8 | 85 | 30 | 30 | 35,4 |
| 17 | 15,55 | 30,0 | 55,23 | 1/3/14 | 0,07 | - | - | - | - | 85 | 30 | 30 | 28,2 |
| 18 | 15,55 | 30,0 | 55,23 | 1/3/14 | 0,07 | - | - | - | - | 85 | 30 | 30 | 28,2 |

| | | | | | | | | | | | | | |
|---|---|---|---|---|---|---|---|---|---|---|---|---|---|
| ¹ Simulsol BPPE ² Exolit AP 462 * Gesamtreaktionszeit | | | | | | | | | | | | | |

**Tabelle 2**

| | Aufkonzentrierung der modifizierten Aminoplastharzlösungen | | | | | | | | |
|---|---|---|---|---|---|---|---|---|---|
| Bsp Nr. | m'₁ [kg/h] | T_{DSV1} [°C] | T_{DSV2} [°C] | P_{DSV1} [mbar] | P_{DSV2} [mbar] | Umetherungsmittel³ [kg/h] a3 | n_{DSV1} [U/Min] | n_{DSV2} [U/Min] | m'₂ [kg/h] |
| 1 | 30 | 85 | 140 | 150 | 150 | - | 1400 | 400 | 9,9 |
| 2 | 30 | 85 | 140 | 150 | 150 | - | 1400 | 400 | 9,9 |
| 3 | 35 | 95 | 140 | 150 | 150 | - | 1400 | 400 | 10,7 |
| 4 | 35 | 95 | 140 | 150 | 150 | - | 1400 | 400 | 10,7 |
| 5 | 35 | 95 | 140 | 150 | 150 | - | 1400 | 400 | 10,7 |
| 6 | 30 | 90 | 140 | 150 | 150 | - | 1400 | 400 | 9,5 |
| 7 | 30 | 90 | 140 | 150 | 150 | - | 1400 | 400 | 9,5 |
| 8 | 35 | 105 | 140 | 150 | 150 | - | 1400 | 400 | 9,9 |
| 9 | 35 | 105 | 140 | 150 | 150 | - | 1400 | 400 | 9,9 |
| 10 | 35 | 105 | 140 | 150 | 150 | - | 1400 | 400 | 9,9 |
| 11 | 35 | 100 | 140 | 150 | 150 | - | 1400 | 400 | 11,0 |
| 12 | 25 | 85 | 140 | 150 | 150 | - | 1400 | 400 | 9,9 |
| 13 | 35 | 100 | 140 | 150 | 150 | 1,74 | 1400 | 400 | 11,6 |
| 14 | 35 | 100 | 140 | 150 | 150 | - | 1400 | 400 | 9,9 |
| 15 | 35 | 100 | 140 | 150 | 150 | - | 1400 | 400 | 10,3 |
| 16 | 30 | 95 | 140 | 150 | 150 | - | 1400 | 400 | 10,0 |
| 17 | 35 | 100 | 140 | 150 | 150 | 0,53 | 1400 | 400 | 10,4 |
| 18 | 35 | 100 | 140 | 150 | 150 | - | 1400 | 400 | 9,9 |

| | | | | | | | | | |
|---|---|---|---|---|---|---|---|---|---|
| ³ Simulsol BPPE | | | | | | | | | |

**Tabelle 3**

| | Reaktive Umsetzung der modifizierten Aminoplastharzschmelzen, Eigenschaften der Granulate | | | | | | | | | | | | |
|---|---|---|---|---|---|---|---|---|---|---|---|---|---|
| Bsp Nr. | Tø₁₋₆ [°C] | T_{Masse} [°C] | P_{Extr} [mbar] | n_{Extr} [rpm] | m'_{Extr} [kg/h] | Umetherungsmittel⁴ | | Kapseln⁵ | | T_{g} [°C] | η (Pa*s)_{g} isotherm 100/130 [°C] | Aushärtungszeit [s] bei T [°C] | Kapseln [Gew.%] |
| | | | | | | a4 [kg/h] | ab1 | | b3 [kg/h] | | | | |
| | | | | | | | [kg/h] | Gehalt[Gew.%] | | | | | |
| 1 | 130 | 120 | 960 | 330 | 9,8 | - | - | - | - | 82 | 15000 / -- | 80 / 150 | 10 |
| 2 | 140 | 130 | 960 | 330 | 9,8 | - | - | - | - | 71 | 10000 / -- | 100 / 150 | 10 |
| 3 | 200 | 190 | 960 | 330 | 12,3 | - | 2,68⁶ | 49,6 | - | 52 | 500 / -- | 300 / 150 | 10 |
| 4 | 150 | 140 | 960 | 330 | 11,8 | - | - | - | 1,19 | 60 | 3000 / -- | 120 / 150 | 10 |
| 5 | 240 | 220 | 960 | 330 | 10,6 | - | - | - | - | 86 | -- / 5800 | 300 / 180 | - |
| 6 | 140 | 130 | 960 | 330 | 9,4 | - | - | - | - | 73 | 11000/ -- | 90 / 150 | 16 |
| 7 | 150 | 140 | 960 | 330 | 9,4 | - | - | - | - | 65 | 8000 / -- | 100 / 150 | 16 |
| 8 | 210 | 200 | 960 | 330 | 12,5 | - | 4,06⁶ | 50,0 | - | 45 | 300 / -- | 500 / 150 | 15 |
| 9 | 170 | 155 | 500 | 330 | 11,55 | - | - | - | 1,75 | 58 | 20000 / 1000 | 110 / 150 | 15 |
| 10 | 240 | 220 | 960 | 330 | 9,8 | - | - | - | - | 69 | -- / 70 | 530 / 180 | - |
| 11 | 250 | 230 | 300 | 330 | 10,7 | - | - | - | - | 50 | -- / 50 | 540 / 180 | - |
| 12 | 200 | 180 | 300 | 330 | 9,6 | - | - | - | - | 60 | 1500 / -- | 280 / 150 | 35 |
| 13 | 210 | 190 | 960 | 330 | 17,2 | - | - | - | 6,1 | 55 | 800 / -- | 360 / 150 | 35,5 |
| 14 | 210 | 190 | 960 | 330 | 18,1 | 2,7 | - | - | 6,1 | 53 | 300 / -- | 420 / 150 | 34 |
| 15 | 245 | 225 | 300 | 330 | 10,0 | - | - | - | - | 55 | -- / 100 | 500 / 180 | - |
| 16 | 190 | 170 | 300 | 330 | 9,7 | - | - | - | - | 64 | 2500 / -- | 240 / 150 | 28 |
| 17 | 200 | 180 | 960 | 330 | 13,9 | - | - | - | 3,9 | 61 | 1000 / -- | 310 / 150 | 28 |
| 18 | 200 | 180 | 960 | 330 | 14,3 | 0,7 | - | - | 4,1 | 58 | 500 / -- | 240 / 150 | 29 |

| | | | | | | | | | | | | | |
|---|---|---|---|---|---|---|---|---|---|---|---|---|---|
| ⁴ Simulsol BPPE ⁵ Exolit AP 462 ⁶ Suspensionsmittel: 50 Gew.% Harzlösung | | | | | | | | | | | | | |

### 2 Herstellung einer Reinharzplatte aus dem modifizierten Aminoplastharzsystem

Aus dem in 1 hergestellten Aminoplastharzsystem der Versuche 4, 5, 9, 10, 11, 13, 15, 17 wurde eine Pressplatte mit den Abmessungen 100 x 100 x 3 mm hergestellt.
Als Werkzeug dafür diente eine Laminatpresse. Das Granulat wurde gemahlen und das Pulver dann in die auf 100°C erwärmte Edelstahlform gefüllt und für ca. 8 min bei dieser Temperatur aufgeschmolzen.
Anschließend wurde das Presswerkzeug auf 180°C erhitzt, für 30 min in die 180°C heiße Presse gelegt und bei 80 bar verpresst. Danach erfolgte für eine Dauer von ca. 15 min die Abkühlung des Probekörpers in der Presse auf 70°C.
Die Reinharzplatte wurde mit 70°C aus der Form entnommen. Aus dieser Reinharzplatte wurden Prüfstäbe für mechanische Tests und für Brandtests hergestellt.

Der Brandtest UL-94 ist ein Test zur Bestimmung der Brennbarkeit von Materialien. Die Einteilung erfolgt nach den Brandklassen V-0, V-1, V-2, n.b., wobei V-0 die höchste (beste) Brandklasse ist, d.h. das Brandverhalten erfüllt alle Testkriterien und n.b. nicht bestanden bedeutet. Der UL-94 Test wird nach ASTM 2863, vertikal, durchgeführt.

Die Eigenschaften der Reinharzplatte sind der **Tabelle 4** zu entnehmen.

In Bezug auf die Brandtests zeigt Tabelle 4, dass die erfindungsgemäßen Aminoplastharzsysteme ein ausgezeichnetes Brandverhalten aufweisen. Bei den veretherten Harzen der Versuche A, C wurde die beste Brandklasse V-0 erhalten, bei den umgeetherten Harzen F und H konnten die Brandklassen V-1 und V-2 erreicht werden.

Im Vergleich dazu wurde von keinem der kapselfreien Harze der Versuche B, D, E und G der Brandtest bestanden.

Aus der Tabelle 4 ist weiters ersichtlich, dass sich durch die Einarbeitung der erfindungsgemäßen Kapseln keine Verschlechterung der Zugfestigkeit und Zugdehnung im Vergleich zu den kapselfreien (Bsp. 5, 10, 11, 15) Aminoplastharzsystemen ergibt.

Bei den umgeetherten Harzen aus den Versuchen E, F, G und H ist außerdem erkennbar, dass bei den erfindungsgemäßen kapselhältigen Harzsystemen (Versuche F und H) ein deutlich höherer Diol-Umsatz erreicht wird als bei den kapselfreien Harzen (Versuche E und G). Ein höherer Diol-Umsatz resultiert in geringeren Emissionen während der Aushärtung bzw. im Endprodukt.

Auch bei der Volumenkontraktion, die ein Maß für den Schwund beim Aushärten ist, ergeben sich für die erfindungsgemäßen kapselhältigen Aminoplastharzsysteme deutlich kleinere Werte als bei den Vergleichsharzen.

### 3 Herstellung von Naturfaserverbunden

Das erfindungsgemäße modifizierte Aminoplastharzsystem der Versuche 4, 5, 9, 10, 11, 13, 15, 17 aus 1 wurde mit einer Pulverstreuanlage auf ein Flachsfaservlies mit einem Flächengewicht von 300-350 g/m² aufgestreut, wobei ein Harzauftrag von etwa 30% des Gesamtgewichtes erreicht wurde.
Das bepulverte Vlies wurde anschließend in einem IR-Feld bei 190°C für 2 min vorkondensiert, anschließend wurden Formen mit 300 x 200 mm ausgestanzt. 6 Lagen von bepulverten Vliesen wurden dann mit der bepulverten Seite nach oben übereinander gelegt und dieser vorkondensierte Faserverbund in eine auf 180°C erhitzte evakuierbare Oberkolbenpresse gelegt.

Nach einer Vorwärmzeit von 30 sec wurde in der ersten Pressstufe für 20 sec auf 400kN gepresst, wobei gleichzeitig das Vakuum auf 200 mbar Absolutdruck gestellt wurde. Danach wurde für 20 sec unter Vakuum entlüftet. In der zweiten Pressstufe wurde der Faserverbund bis zum Aushärtungsgrad von 95%, gemessen mittels Ultraschall, gepresst. Der ausgehärtete Verbundwerkstoff wurde bei 180°C heiß entnommen.

Die Eigenschaften des Verbundwerkstoffes sind der **Tabelle 5** zu entnehmen.

Daraus sind deutliche Vorteile der erfindungsgemäßen Aminoplastharzsysteme gegenüber kapselfreien Harzen (Bsp. 5, 10, 11, 15) in Bezug auf das Brandverhalten, den Diol-Umsatz, die Volumenkontraktion, die Aushärtungszeit und die Schlagzähigkeit ersichtlich.

**Tabelle 4**

| Eigenschaften der Reinharzplatten - Harzprobekörper ohne Verstärkungsfasern | | | | | | | | |
|---|---|---|---|---|---|---|---|---|
| Versuch | Harz aus Bsp. Nr. | Kapsel-Gehalt | UL-94 3mm Platte | Zugfestigkeit | Zugdehnung | Umsatz Diol | Masseverlust bei der Verarbeitung | Volumen-kontraktion |
| | | [Gew.%] | [--] | [MPa] | [%] | [%] | [Gew.%] | [%] |
| A | 4 | 10 | V-0 | 40 | 1,2 | - | 3,5 | 9 |
| B | 5 | - | n.b. | 35 | 1,5 | - | 4 | 10 |
| C | 9 | 15 | V-0 | 35 | 1,4 | - | 4 | 8 |
| D | 10 | - | n.b. | 30 | 1,6 | - | 5 | 9 |
| E | 11 | - | n.b. | 25 | 2,5 | 60 | 11 | 12 |
| F | 13 | 35,5 | V-2 | 35 | 1,5 | 85 | 3,5 | 9 |
| G | 15 | - | n.b. | 30 | 2,0 | 60 | 9 | 11 |
| H | 17 | 28 | V-1 | 35 | 1,3 | 80 | 3 | 9 |

**Tabelle 5**

| Eigenschaften der Faserverbunde - Harzprobekörper mit Naturfaserverstärkung | | | | | | | | | | | |
|---|---|---|---|---|---|---|---|---|---|---|---|
| Versuch | Harz Nr. | Faser-gehalt | Kapsel-Gehalt im Harz | UL-94 3mm Platte | Zugfestigkeit | Zugdehnung | Umsatz Diol | Masseverlust bei der Verarbeitung | Volumen-kontraktion | Aushärtungszeit bei 180°C | Schlagzähigkeit |
| | | [%] | [Gew.%] | [--] | [MPa] | [%] | [%] | [Gew.%] | [%] | [sec] | [kJ/m²] |
| A1 | 4 | 70 | 10 | V-0 | 8000 | 3,5 | - | 1,9 | 1,0 | 180 | 28 |
| B1 | 5 | 70 | - | n.b. | 7800 | 3,0 | - | 2,1 | 2,5 | 370 | 25 |
| C1 | 9 | 70 | 15 | V-0 | 7900 | 3,3 | - | 2,5 | 1,3 | 240 | 30 |
| D1 | 10 | 70 | - | n.b. | 7800 | 3,1 | - | 2,2 | 2,9 | 420 | 23 |
| E1 | 11 | 70 | - | n.b. | 6000 | 4,5 | 65 | 3,0 | 3,5 | 600 | 20 |
| F1 | 13 | 70 | 35,5 | V-0 | 6200 | 5,1 | 95 | 3,2 | 1,5 | 260 | 26 |
| G1 | 15 | 70 | - | n.b. | 6800 | 4,0 | 60 | 2,6 | 3,0 | 530 | 22 |
| H1 | 17 | 70 | 28 | V-0 | 7000 | 4,6 | 93 | 2,8 | 2,6 | 290 | 28 |

## Patentansprüche

1. Flammfest ausgerüstetes Aminoplastharzsystem, insbesondere Melamin-Formaldehydharz-, Melamin/Harnstoff-Formaldehydharz- oder Harnstoff-Formaldehydharzsystem, mit
a) einer modifizierten Aminoplastharzmatrix, wobei im modifizierten Aminoplastharz die primären Aminoplastkondensationsprodukte mindestens teilweise in veretherter Form vorliegen und das modifizierte Aminoplastharz aus einer im wesentlichen lösungsmittelfreien Aminoplastharzschmelze erhalten wurde und
b) mindestens einer Phosphor und/oder Stickstoff und/oder Bor in chemisch gebundener Form enthaltenden und in verkapselter Form, insbesondere von einem Kapselwandmaterial umschlossenen Form, in der Aminoplastharzmatrix vorliegenden Verbindung als flammhemmender Komponente.

2. Aminoplastharzsystem nach Anspruch 1, **dadurch gekennzeichnet, dass** das Aminoplastharz mit C₁-C₄-Alkoholen verethert ist.

3. Aminoplastharzsystem nach einem der Ansprüche 1 oder 2, **dadurch gekennzeichnet, dass** das modifizierte Aminoplastharz Umetherungsmittel und/oder Modifizierungsmittel und/oder Füllstoffe, Verstärkungsfasern, weitere Polymere, Stabilisatoren, UV-Absorber und/oder Hilfsstoffe enthält.

4. Aminoplastharzsystem nach Anspruch 3, **dadurch gekennzeichnet, dass** als Umetherungsmittel aliphatische C₄-C₁₈-Alkohole oder aromatische Alkohole, Diole, Polyole oder deren Mischungen eingesetzt werden.

5. Aminoplastharzsystem nach mindestens einem der vorher genannten Ansprüche, **dadurch gekennzeichnet, dass** mindestens eine in verkapselter Form vorliegende Verbindung Ammoniumpolyphosphat, Melaminpolyphosphat, Phosphor-säureester und Phosphonsäureester auf Basis der Umsetzung von Phosphorpentoxid bzw. Phosphortrioxid mit Pentaerythrit bzw. Dipentaerythrit, sowie deren Ammonium- und Melaminsalze enthält.

6. Aminoplastharzsystem nach mindestens einem der vorher genannten Ansprüche, **dadurch gekennzeichnet, dass** mindestens eine in verkapselter Form vorliegende Verbindung neben der flammhemmenden zusätzlich eine protonenfreisetzende Wirkung hat.

7. Aminoplastharzsystem nach mindestens einem der vorher genannten Ansprüche, **dadurch gekennzeichnet, dass** es mehrere verschiedene in verkapselter Form vorliegende Verbindungen enthält.

8. Aminoplastharzsystem nach mindestens einem der vorher genannten Ansprüche, **dadurch gekennzeichnet, dass** das Kapselwandmaterial ein Duroplastharz, insbesondere ein Aminoplastharz, ein Epoxidharz, ein ungesättigtes Polyesterharz oder ein Phenolharz aufweist.

9. Aminoplastharzsystem nach Anspruch 8, **dadurch gekennzeichnet, dass** das Kapselwandmaterial ein modifiziertes Aminoplastharz aufweist, welches ähnliche Oberflächeneigenschaften wie das die modifizierte Aminoplastharzmatrix bildende modifizierte Aminoplastharz hat.

10. Aminoplastharzsystem nach mindestens einem der vorher genannten Ansprüche, **dadurch gekennzeichnet, dass** mindestens eine in verkapselter Form vorliegende Verbindung in homogen verteilter Form in der Aminoplastharzmatrix vorliegt.

11. Aminoplastharzsystem nach mindestens einem der vorher genannten Ansprüche, **dadurch gekennzeichnet, dass** das Verhältnis Durchmesser zu Kapselwanddicke der Kapseln zwischen 5 und 1000 liegt.

12. Aminoplastharzsystem nach mindestens einem der vorher genannten Ansprüche, **dadurch gekennzeichnet, dass** der durchschnittliche Durchmesser D der Kapseln im Bereich von 1-100 µm, bevorzugt von 10-60 µm, besonders bevorzugt von 20-50 µm liegt.

13. Aminoplastharzsystem nach mindestens einem der vorher genannten Ansprüche, **dadurch gekennzeichnet, dass** die geometrische Form der Kapseln sphärisch ist.

14. Aminoplastharzsystem nach mindestens einem der vorher genannten Ansprüche, **dadurch gekennzeichnet, dass** die Menge mindestens einer in verkapselter Form vorliegender Verbindung 0,5 bis 50 Gew.%, bevorzugt 1 bis 40 Gew.%, besonders bevorzugt 5 bis 25 Gew.% bezogen auf das Gesamtgewicht des ausgehärteten Aminoplastharzsystems ist.

15. Aminoplastharzsystem nach mindestens einem der vorher genannten Ansprüche, **dadurch gekennzeichnet, dass** die Menge mindestens einer in den Kapseln enthaltenen Verbindung 50 bis 98 Gew.%, bevorzugt 70 bis 90 Gew.%, bezogen auf das Gesamtgewicht einer in verkapselter Form vorliegenden Verbindung beträgt.

16. Aminoplastharzsystem nach mindestens einem der vorher genannten Ansprüche, **dadurch gekennzeichnet, dass** mindestens eine in verkapselter Form vorliegende Verbindung dem modifizierten Aminoplastharz als Pulver und/oder als Suspension zugegeben wird.

17. Aminoplastharzsystem nach Anspruch 16, **dadurch gekennzeichnet, dass** als Suspensionsmittel die im wesentlichen lösungsmittelfreie Aminoplastharzschmelze und/oder zumindest ein Teil der für die Modifizierung des Aminoplastharzes verwendeten Umetherungs- und/oder Modifizierungsmittel verwendet werden.

18. Aminoplastharzsystem nach Anspruch 16, **dadurch gekennzeichnet, dass** der Feststoffgehalt der Suspension 30 bis 90 Gew.%, bevorzugt 40 bis 80 Gew.% und die Viskosität 10 bis 5000 mPa*s, bevorzugt 250 bis 1000 mPa*s beträgt.

19. Verfahren zur Herstellung eines flammfest ausgerüsteten Aminoplastharzsystems nach mindestens einem der Ansprüche 1 bis 18,
**dadurch gekennzeichnet, dass**
a) eine modifizierte Aminoplastharzlösung oder Aminoplastharzsuspension aus einem Aminoplastbildner, einer Carbonylverbindung und einem C₁ - C₄-Alkohol bei pH = 2 bis 7, einer Temperatur von 40 bis 160 °C, einem Druck von 0 bis 5 bar und einer Reaktionszeit von 5 bis 300 Minuten hergestellt wird,
b) nach Alkalischstellen des pH-Wertes die modifizierte Aminoplastharzlösung oder Aminoplastharzsuspension durch Abdestillieren der Lösungsmittel bei 50 bis 180 °C, -1 bis 0 bar und einer Verweilzeit von 1 bis 120 Minuten zu einer im wesentlichen lösungsmittelfreien Aminoplastharzschmelze aufkonzentriert wird,
c) die im wesentliche lösungsmittelfreie Aminoplastharzschmelze bei einer Temperatur von 130 bis 250 °C, -1 bis 0 bar und einer Verweilzeit von 0,5 bis 10 Minuten in einem Extruder oder Kneter zur Vorkondensation und Konditionierung umgesetzt wird,
wobei die Zugabe mindestens einer von einem Kapselwandmaterial umschlossen, also in verkapselter Form vorliegenden Verbindung während oder nach Schritt a) und/oder während oder nach Schritt b) und/oder während oder nach Schritt c) erfolgt, worauf d) das flammfest ausgerüstete Aminoplastharzsystem konfektioniert und ausgetragen wird.

20. Verfahren nach Anspruch 19, **dadurch gekennzeichnet, dass** dem modifizierten Aminoplastharz während oder nach Schritt a)und/oder während Schritt b) und/oder während Schritt c) Umetherungs- und/oder Modifizierungsmittel zugegeben werden.

21. Verfahren nach Anspruch 20, **dadurch gekennzeichnet, dass** die Zugabe mindestens einer in verkapselter Form vorliegenden Verbindung in, in den Umetherungs- und/oder Modifizierungsmitteln, suspendierter Form während der reaktiven Umsetzung in einem Extruder erfolgt.

22. Verfahren nach einem der Ansprüche 19 bis 21, **dadurch gekennzeichnet, dass** die reaktive Umsetzung in zwei in Serie geschalteten Extrudern durchgeführt wird.

23. Verwendung eines flammfest ausgerüsteten Aminoplastharzsystems nach mindestens einem der Ansprüche 1 bis 18 zur Herstellung von Hybridharzsystemen, wobei die Hybridharzsysteme durch Mischung und/oder chemische Umsetzung der flammfest ausgerüsteten Aminoplastharzsysteme mit modifizierten und/oder unmodifizierten Melamin-Formaldehydharzen, Epoxidharzen, Polyurethanharzen, ungesättigten Polyesterharzen und/oder Alkydharzen als Schmelzen in einem Kneter, Mischer oder Extruder hergestellt werden.

24. Verwendung eines flammfest ausgerüsteten Aminoplastharzsystems nach mindestens einem der Ansprüche 1 bis 18 in Form eines Granulates und/oder Pulvers als Pressmassenharz oder als Spritzgussharz.

25. Verwendung eines flammfest ausgerüsteten Aminoplastharzsystems nach mindestens einem der Ansprüche 1 bis 18 zur Herstellung eines Verbundwerkstoffes, wobei ein Trägermaterial mit dem flammfest ausgerüsteten Aminoplastharzsystem bepulvert und/oder das Aminoplastharzsystem aufgeschmolzen und das Trägermaterial durch die Harzschmelze gezogen wird, worauf ein Vorkondensationsschritt im Bereich von etwa 110-250 °C für eine Dauer von etwa 1-10 Minuten erfolgt, worauf das erhaltene lagerfähige Prepreg unter Temperaturerhöhung einer Formgebung unterzogen und dabei ausgehärtet wird.

26. Verwerdung eines flammfest ausgerüsteten Aminoplastharzsystems nach mindestens einem der Ansprüche 1 bis 18 für Rohre, Platten, Profile, Spritzgussteile, Fasen, als Härter oder Vernetzer in Pulverlacksystemen oder für die Herstellung von flammfesten Formteilen.

27. Verbundwerkstoff, **dadurch hergestellt,** dass ein Trägermaterial mit einem flammfest ausgerüsteten Aminoplastharzsystem nach einem der Ansprüche 1 bis 18 bepulvert und/oder das Aminoplastharzsystem aufgeschmolzen und das Trägermaterial durch die Harzschmelze gezogen wird, worauf ein Vorkondensationsschritt im Bereich von etwa 110-250 °C für eine Dauer von etwa 1-10 Minuten erfolgt, worauf das erhaltene lagerfähige Prepreg unter Temperaturerhöhung einer Formgebung unterzogen und dabei ausgehärtet wird.

28. Verbundwerkstoff nach Anspruch 27, **dadurch hergestellt,** dass die Formgebung und Aushärtung durch einen Pressvorgang in einem sauren pH-Bereich von pH 3 - pH 6,5 bei 90 bis 250 °C, 10 bis 250 bar Pressdruck und für eine Dauer von 0,5 bis 30 Minuten erfolgt.

## Claims

1. Flame-resistant aminoplast resin system, in particular melamine-formaldehyde resin, melamine/urea-formaldehyde resin or ureaformaldehyde resin system, comprising
a) a modified aminoplast resin matrix, the primary aminoplast condensates being present at least partly in etherified form in the modified aminoplast resin, and the modified aminoplast resin having been obtained from a substantially solvent-free aminoplast resin melt, and
b) at least one compound which contains phosphorus and/or nitrogen and/or boron in chemically bonded form and is present in encapsulated form, in particular in a form enclosed by a capsule wall material, in the aminoplast resin matrix, as a flame-retardant component.

2. Aminoplast resin system according to Claim 1, **characterized in that** the aminoplast resin is etherified with C₁-C₄-alcohols.

3. Aminoplast resin system according to either of Claims 1 and 2, **characterized in that** the modified aminoplast resin contains transetherification agents and/or modifiers and/or fillers, reinforcing fibers, further polymers, stabilizers, UV absorbers and/or auxiliaries.

4. Aminoplast resin system according to Claim 3, **characterized in that** the transetherification agents used are aliphatic C₄-C₁₈-alcohols or aromatic alcohols, diols, polyols or mixtures thereof.

5. Aminoplast resin system according to at least one of the abovementioned claims, **characterized in that** at least one compound present in encapsulated form contains ammonium polyphosphate, melamine polyphosphate, phosphoric acid ester and phosphonic acid ester based on the reaction of phosphorus pentoxide or phosphorus trioxide with pentaerythritol or dipentaerythritol, and ammonium and melamine salts thereof.

6. Aminoplast resin system according to at least one of the abovementioned claims, **characterized in that** at least one compound present in encapsulated form also has a proton-liberating effect in addition to the flame-retardant effect.

7. Aminoplast resin system according to at least one of the abovementioned claims, **characterized in that** it contains a plurality of different compounds present in encapsulated form.

8. Aminoplast resin system according to at least one of the abovementioned claims, **characterized in that** the capsule wall material comprises a thermosetting resin, in particular an aminoplast resin, an epoxy resin, an unsaturated polyester resin or a phenol resin.

9. Aminoplast resin system according to Claim 8, **characterized in that** the capsule wall material comprises a modified aminoplast resin which has surface properties similar to the modified aminoplast resin forming the modified aminoplast resin matrix.

10. Aminoplast resin system according to at least one of the abovementioned claims, **characterized in that** at least one compound present in encapsulated form is present in homogeneously distributed form in the aminoplast resin matrix.

11. Aminoplast resin system according to at least one of the abovementioned claims, **characterized in that** the ratio of diameter to capsule wall thickness of the capsules is from 5 to 1000.

12. Aminoplast resin system according to at least one of the abovementioned claims, **characterized in that** the average diameter D of the capsules is in the range of 1-100 µm, preferably of 10-60 µm, particularly preferably of 20-50 µm.

13. Aminoplast resin system according to at least one of the abovementioned claims, **characterized in that** the geometrical shape of the capsules is spherical.

14. Aminoplast resin system according to at least one of the abovementioned claims, **characterized in that** the amount of at least one compound present in encapsulated form is from 0.5 to 50% by weight, preferably from 1 to 40% by weight, particularly preferably from 5 to 25% by weight, based on the total weight of the cured aminoplast resin system.

15. Aminoplast resin system according to at least one of the abovementioned claims, **characterized in that** the amount of at least one compound present in the capsules is from 50 to 98% by weight, preferably from 70 to 90% by weight, based on the total weight of a compound present in encapsulated form.

16. Aminoplast resin system according to at least one of the abovementioned claims, **characterized in that** at least one compound present in encapsulated form is added to the modified aminoplast resin as powder and/or as suspension.

17. Aminoplast resin system according to Claim 16, **characterized in that** the substantially solvent-free aminoplast resin melt and/or at least a part of the transetherification agents and/or modifiers used for modifying the aminoplast resin are used as suspending agents.

18. Aminoplast resin system according to Claim 16, **characterized in that** the solids content of the suspension is from 30 to 90% by weight, preferably from 40 to 80% by weight, and the viscosity is from 10 to 5000 mPa.s, preferably from 250 to 1000 mPa.s.

19. Process for the preparation of a flame-resistant aminoplast resin system according to at least one of Claims 1 to 18, **characterized in that**
a) a modified aminoplast resin solution or aminoplast resin suspension is prepared from an aminoplast former, a carbonyl compound and a C₁-C₄-alcohol at pH = 2 to 7, a temperature of from 40 to 160°C and a pressure of from 0 to 5 bar and a reaction time of from 5 to 300 minutes,
b) after the pH has been made alkaline, the modified aminoplast resin solution or aminoplast resin suspension is concentrated by distilling off the solvent at from 50 to 180°C and from -1 to 0 bar and in a residence time of from 1 to 120 minutes to give a substantially solvent-free aminoplast resin melt,
c) the substantially solvent-free aminoplast resin melt is reacted at a temperature of from 130 to 250°C and from -1 to 0 bar and in a residence time of from 0.5 to 10 minutes in an extruder or kneader for pre-condensation and conditioning,
the addition of at least one compound enclosed by a capsule wall material, i.e. present in encapsulated form, being effected during or after step a) and/or during or after step b) and/or during or after step c), whereupon
d) the flame-resistant aminoplast resin system is compounded and discharged.

20. Process according to Claim 19, **characterized in that** transetherification agents and/or modifiers are added to the modified aminoplast resin during or after step a) and/or during step b) and/or during step c).

21. Process according to Claim 20, **characterized in that** the addition of at least one compound present in encapsulated form in the form of a suspension in the transetherification agents and/or modifiers is effected during the reactive conversion in an extruder.

22. Process according to any of Claims 19 to 21, **characterized in that** the reactive conversion is carried out in two extruders connected in series.

23. Use of a flame-resistant aminoplast resin system according to at least one of Claims 1 to 18 for the preparation of hybrid resin systems, the hybrid resin systems being prepared by mixing and/or chemical reaction of the flame-resistant aminoplast resin systems with modified and/or unmodified melamine-formaldehyde resins, epoxy resins, polyurethane resins, unsaturated polyester resins and/or alkyd resins as melts in a kneader, mixer or extruder.

24. Use of a flame-resistant aminoplast resin system according to at least one of Claims 1 to 18 in the form of granules and/or powder as compression molding resin or as injection molding resin.

25. Use of a flame-resistant aminoplast resin system according to at least one of Claims 1 to 18 for the production of a composite material, a substrate material being coated with the flame-resistant aminoplast resin system in powder form and/or the aminoplast resin system being melted and the substrate material being drawn through the resin melt, whereupon a pre-condensation step in the range of about 110-250°C for a duration of about 1-10 minutes is effected, whereupon the storable prepreg obtained is subjected to shaping with a temperature increase and is cured thereby.

26. Use of a flame-resistant aminoplast resin system according to at least one of Claims 1 to 18 for pipes, sheets, profiles, injection molded parts or fibers, as a curing agent or crosslinking agent in powder coating systems or for the production of flame-resistant shaped articles.

27. Composite material, produced in that a substrate material is coated with a flame-resistant aminoplast resin system according to any of Claims 1 to 18 in powder form and/or the aminoplast resin system is melted and the substrate material is drawn through the resin melt, whereupon a pre-condensation step in the range of about 110-250°C for a duration of about 1-10 minutes is effected, whereupon the storable prepreg obtained is subjected to shaping with a temperature increase and is cured thereby.

28. Composite material according to Claim 27, produced in that the shaping and curing are effected by a pressing process in an acidic pH range of pH 3-pH 6.5 at from 90 to 250°C and from 10 to 250 bar compression pressure and for a duration of from 0.5 to 30 minutes.

## Revendications

1. Système de résine aminoplaste apprêtée de manière résistante aux flammes, en particulier un système de résine mélamine-formaldéhyde, mélamine/urée-formaldéhyde ou urée-formaldéhyde, avec
a) une matrice de résine aminoplaste modifiée, où, dans la résine aminoplaste modifiée, les produits de condensation aminoplastes primaires se trouvent au moins partiellement sous forme éthérée et la résine aminoplaste modifiée a été obtenue à partir d'une masse fondue de résine aminoplaste essentiellement exempte de solvant et
b) au moins un composé, contenant du phosphore et/ou de l'azote et/ou du bore sous forme chimiquement liée et se trouvant dans la matrice de résine aminoplaste sous forme encapsulée, en particulier entourée par un matériau formant une paroi de capsule, comme composant retardateur de flammes.

2. Système de résine aminoplaste selon la revendication 1, **caractérisé en ce que** la résine aminoplaste est éthérifiée avec des C₁-C₄-alcools.

3. Système de résine aminoplaste selon l'une quelconque des revendications 1 ou 2, **caractérisé en ce que** la résine aminoplaste modifiée contient des agents de transéthérification et/ou des agents de modification et/ou des charges, des fibres de renforcement, d'autres polymères, des stabilisateurs, des absorbants des UV et/ou des adjuvants.

4. Système de résine aminoplaste selon la revendication 3, **caractérisée en ce qu'**on utilise, comme agent de transéthérification, des C₄-C₁₈-alcools aliphatiques ou des alcools aromatiques, des diols, des polyols ou leurs mélanges.

5. Système de résine aminoplaste selon au moins l'une quelconque des revendications précédentes, **caractérisé en ce qu'**au moins un composé se trouvant sous forme encapsulée contient du polyphosphate d'ammonium, du polyphosphate de mélamine, des esters de l'acide phosphorique et des esters de l'acide phosphonique basés sur la transformation de pentoxyde de phosphore ou de trioxyde de phosphore avec du pentaérythritol ou du dipentaérythritol, ainsi que leurs sels d'ammonium et de mélamine.

6. Système de résine aminoplaste selon au moins l'une quelconque des revendications précédentes, **caractérisé en ce qu'**au moins un composé se trouvant sous forme encapsulée présente, en plus de l'effet retardateur de flamme, également un effet de libération de protons.

7. Système de résine aminoplaste selon au moins l'une quelconque des revendications précédentes, **caractérisé en ce qu'**il contient plusieurs composés différents se trouvant sous forme encapsulée.

8. Système de résine aminoplaste selon au moins l'une quelconque des revendications précédentes, **caractérisé en ce que** le matériau formant la paroi de la capsule présente une résine thermodurcissable, en particulier une résine aminoplaste, une résine époxyde, une résine polyester insaturée ou une résine phénolique.

9. Système de résine aminoplaste selon la revendication 8, **caractérisé en ce que** le matériau formant la paroi de la capsule présente une résine aminoplaste modifiée, qui présente des propriétés superficielles analogues à celles de la résine aminoplaste modifiée formant la matrice de résine aminoplaste modifiée.

10. Système de résine aminoplaste selon au moins l'une quelconque des revendications précédentes, **caractérisé en ce qu'**au moins un composé se trouvant sous forme encapsulée se trouve sous une forme répartie de manière homogène dans la matrice de résine aminoplaste.

11. Système de résine aminoplaste selon au moins l'une quelconque des revendications précédentes, **caractérisé en ce que** le rapport diamètre à épaisseur de paroi des capsules est situé entre 5 et 1 000.

12. Système de résine aminoplaste selon au moins l'une quelconque des revendications précédentes, **caractérisé en ce que** le diamètre moyen D des capsules se trouve dans la plage de 1-100 µm, de préférence de 10-60 µm, de manière particulièrement préférée de 20-50 µm.

13. Système de résine aminoplaste selon au moins l'une quelconque des revendications précédentes, **caractérisé en ce que** la forme géométrique des capsules est sphérique.

14. Système de résine aminoplaste selon au moins l'une quelconque des revendications précédentes, **caractérisé en ce que** la quantité d'au moins un composé se trouvant sous forme encapsulée représente 0,5 à 50% en poids, de préférence 1 à 40% en poids, de manière particulièrement préférée 5 à 25% en poids par rapport au poids total du système de résine aminoplaste durci.

15. Système de résine aminoplaste selon au moins l'une quelconque des revendications précédentes, **caractérisé en ce que** la quantité d'au moins un composé contenu dans les capsules représente 50 à 98% en poids, de préférence 70 à 90% en poids par rapport au poids total d'un composé se trouvant sous forme encapsulée.

16. Système de résine aminoplaste selon au moins l'une quelconque des revendications précédentes, **caractérisé en ce qu'**au moins un composé se trouvant sous forme encapsulée est ajouté à la résine aminoplaste modifiée sous forme de poudre et/ou de suspension.

17. Système de résine aminoplaste selon la revendication 16, **caractérisé en ce qu'**on utilise comme agents de mise en suspension la masse fondue de résine aminoplaste essentiellement exempte de solvant et/ou au moins une partie des agents de transéthérification et/ou de modification utilisés pour la modification de la résine aminoplaste.

18. Système de résine aminoplaste selon la revendication 16, **caractérisé en ce que** la teneur en solides dans la suspension est de 30 à 90% en poids, de préférence de 40 à 80% en poids et la viscosité est de 10 à 5 000 mPa.s, de préférence de 250 à 1 000 mPa.s.

19. Procédé pour la préparation d'un système de résine aminoplaste apprêté de manière résistante aux flammes selon au moins l'une quelconque des revendications 1 à 18, **caractérisé en ce qu'**on
a) prépare une solution de résine aminoplaste modifiée ou une suspension de résine aminoplaste modifiée constituée par un agent de formation d'aminoplaste, un composé carbonyle et un C₁-C₄-alcool à pH = 2 à 7, à une température de 40 à 160°C, une pression de 0 à 5 bars pendant un temps de réaction de 5 à 300 minutes,
b) concentre, après avoir réglé le pH à une valeur alcaline, la solution de résine aminoplaste modifiée ou la suspension de résine aminoplaste modifiée, par élimination par distillation du solvant à 50 jusqu'à 180°C, -1 jusqu'à 0 bar pendant un temps de séjour de 1 à 120 minutes en une masse fondue de résine aminoplaste essentiellement exempte de solvant,
c) transforme la masse fondue de résine aminoplaste essentiellement exempte de solvant à une température de 130 à 250°C, à -1 jusqu'à 0 bar et pendant une durée de séjour de 0,5 à 10 minutes dans une extrudeuse ou un malaxeur en vue de la précondensation et du conditionnement,
l'addition d'au moins un composé entouré d'un matériau formant une paroi de capsule, se trouvant donc sous forme encapsulée, ayant lieu pendant ou après l'étape
a) et/ou pendant ou après l'étape b) et/ou pendant ou après l'étape c), puis
d) le système de résine aminoplaste apprêté de manière résistante aux flammes est confectionné et évacué.

20. Procédé selon la revendication 19, **caractérisé en ce qu'**on ajoute à la résine aminoplaste modifiée, pendant ou après l'étape a) et/ou pendant l'étape b) et/ou pendant l'étape c), des agents de transéthérification et/ou de modification.

21. Procédé selon la revendication 20, **caractérisé en ce que** l'addition d'au moins un composé se trouvant sous forme encapsulée dans la forme mise en suspension dans les agents de transéthérification et/ou de modification a lieu pendant la transformation réactive dans une extrudeuse.

22. Procédé selon l'une quelconque des revendications 19 ou 21, **caractérisé en ce que** la transformation réactive est réalisée dans deux extrudeuses disposées en série.

23. Utilisation d'un système de résine aminoplaste apprêté de manière résistante aux flammes selon au moins l'une quelconque des revendications 1 à 18 pour la production de systèmes de résine hybride, les systèmes de résine hybride étant produits par mélange et/ou transformation chimique des systèmes de résine aminoplaste apprêtés de manière résistante aux flammes avec des résines modifiées ou non modifiées de type mélamine-formaldéhyde, époxyde, polyuréthane, polyester insaturé et/ou alkyde sous forme de masses fondues dans un malaxeur, un mélangeur ou une extrudeuse.

24. Utilisation d'un système de résine aminoplaste apprêté de manière résistante aux flammes selon au moins l'une quelconque des revendications 1 à 18 sous forme d'un granulat et/ou d'une poudre comme résine pour une masse à presser ou comme résine pour le moulage par injection.

25. Utilisation d'un système de résine aminoplaste apprêté de manière résistante aux flammes selon au moins l'une quelconque des revendications 1 à 18 pour la production d'un matériau composite, où un matériau support est saupoudré par le système de résine aminoplaste apprêté de manière résistante aux flammes et/ou le système de résine aminoplaste est fondu et le matériau support est tiré dans la masse fondue de résine, puis une étape de précondensation est réalisée dans la plage d'environ 110-250°C pendant une durée d'environ 1-10 minutes, puis la feuille préimprégnée apte à l'entreposage obtenue est soumise à un façonnage sous une température élevée et est durcie.

26. Utilisation d'un système de résine aminoplaste apprêté de manière résistant aux flammes selon au moins l'une quelconque des revendications 1 à 18 pour des tuyaux, des plaques, des profilés, des pièces moulées par injection, des fibres, comme durcisseurs ou réticulants dans des systèmes de laque en poudre ou pour la production de pièces façonnées résistantes aux flammes.

27. Matériau composite produit en ce qu'un matériau support est saupoudré par un système de résine aminoplaste apprêté de manière résistante aux flammes selon l'une quelconque des revendications 1 à 18 et/ou le système de résine aminoplaste est fondu et le matériau support est tiré dans la masse fondue de résine, puis une étape de précondensation est réalisée dans la plage d'environ 110-250°C pendant une durée d'environ 1-10 minutes, puis la feuille préimprégnée apte à l'entreposage obtenue est soumise à un façonnage sous une température élevée et est durcie.

28. Matériau composite selon la revendication 27, **caractérisé en ce que** le façonnage et le durcissement sont réalisés par un processus de pressage dans une plage de pH acide de pH 3 - pH 6,5 à 90 jusqu'à 250°C, à une pression de pressage de 10 à 250 bars et pendant une durée de 0,5 à 30 minutes.
